# EUROPEAN PATENT APPLICATION

(11) **EP 4 624 023 A2**
(43) Date of publication of application: **01.10.2025**
(21) Application number: 25195438.4
(22) Date of filing: 23.10.2020
(51) Int. Cl.: B01D 46/24

(54) **CLOTHES DRYING DEVICE**

(30) Priority: 26.11.2019 CN 201911175993; 26.11.2019 CN 201911175996; 26.11.2019 CN 201911177009; 26.11.2019 CN 201911177013
(62) Divisional of application: 20894389.4
(71) Applicant: Qingdao Haier Drum Washing Machine Co., Ltd., Qingdao Shandong 266101 (CN); Haier Smart Home Co., Ltd., Qingdao, Shandong 266101 (CN)
(72) Inventor: LI, Quande, Qingdao, Shandong, 266101 (CN); BING, Jindong, Qingdao, Shandong, 266101 (CN); WANG, Jian, Qingdao, Shandong, 266101 (CN); YANG, Kun, Qingdao, Shandong, 266101 (CN); LIU, Xiujiao, Qingdao, Shandong, 266101 (CN)
(74) Representative: Bauer PSU PartG mbB

(57) **Abstract**

A clothes drying device, wherein a lint cleaning component (6) and a lint collecting component are both arranged on a mounting component, and the mounting component is arranged on a box body assembly, so that the lint cleaning component (6) and the lint collecting component are arranged at a centralized position in the clothes dryer. The present invention solves the problem in existing clothes dryers that a fiber removing component and a collecting container are arranged at dispersed positions on a clothes dryer and occupy a large amount of space, which affects the overall layout of the clothes dryer such that the overall structure of the clothes dryer is not compact, and downgrades the user experience.

## Description

The present application is a divisional application of European Patent Application 20 894 389.4 which is derived from PCT/CN2020/123030.

### FIELD

The present disclosure relates to the technical field of clothing drying apparatus, and specifically relates to a clothing drying apparatus.

### BACKGROUND

A clothing dryer is a cleaning household appliance that instantly evaporates and dries moisture in the washed clothing. The clothing dryer generally includes a shell, a motor, a fan, a heater and a drum. The shell of the clothing dryer is provided with a wind inlet and a wind outlet. An interior of the clothing dryer is formed with a wind flow route, and the fan draws natural wind into the clothing dryer from the wind inlet. After being heated by the heater, the natural wind forms hot wind which enters the interior of the drum. At the same time, the motor drives the drum to rotate, so that the clothing fully contacts with the hot wind. The hot wind mixes with the water vapor in the drum to form humid wind. The humid wind passes through the drum and is discharged out of the clothing dryer from the wind outlet.

A patent application document, publication number of which is CN1 133074A, discloses a clothing dryer. The drum of this clothing dryer has an air inlet and an air outlet. A fiber lint filter, a collection container and a fiber lint removal part are arranged at positions adjacent to the air outlet. The fiber lint filter can rotate together with the drum. During the rotation of the drum, a wind flow will bring the fiber lint and other impurities in the drum to a surface of the fiber lint filter when it flows out of the outlet of the drum. The lint removal part is connected to an inner wall of the shell and is located above a clothing throw-in port. During the operation of the clothing dryer, a door hinged to a front panel is closed, and the lint removal part scrapes the lint accumulated on the surface of the fiber lint filter into the collection container formed by an inner cavity inside the door of the clothing dryer.

However, in the existing clothing dryers, the fiber lint removal part is directly arranged on the clothing throw-in port of the clothing dryer, which hinders clothing throw-in and makes an overall structure of the clothing dryer not concise, thereby affecting the user experience in use.

Accordingly, there is a need in the art for a new clothing drying apparatus to solve the above problem.

### SUMMARY

In order to solve the above problem in the prior art pointed out in the second background art, that is, to solve the problem in existing clothing dryers that the fiber lint removal part directly arranged on the clothing throw-in port of the clothing dryer will hinder clothing throw-in and make an overall structure of the clothing dryer not concise, thereby affecting the user experience in use, the second technical solution of the present disclosure provides a clothing dryer.

The clothing drying apparatus provided by the present disclosure includes a cabinet and a drying drum; a front panel of the cabinet is formed with a clothing throw-in port, and the front panel is also provided with a front support mechanism which is located between the front panel and the drying drum; the clothing drying apparatus further includes a lint cleaning member, a lint collecting member and an annular filter member; the annular filter member is connected with the drying drum and can rotate when driven by the drying drum; the lint cleaning member is arranged on the front support mechanism, and the lint collecting member is completely arranged inside the front support mechanism or on a rear side of the front support mechanism; the lint cleaning member is arranged to be capable of cleaning up the lint on the annular filter member when the annular filter member rotates so that the lint can be collected by the lint collecting member.

As a preferred technical solution of the above clothing drying apparatus provided by the present disclosure, the front support mechanism includes a first support member and a second support member that are connected; at least one of the first support member and the second support member is provided on the front panel, and the first support member and the second support member together form an annular cavity that communicates an air duct of the clothing drying apparatus with an interior of the drying drum; the lint cleaning member and the lint collecting member are both arranged on the second support member, the lint collecting member is completely located inside the annular cavity, and at least a part of the annular filter member is arranged inside the annular cavity.

As a preferred technical solution of the above clothing drying apparatus provided by the present disclosure, the second support member includes an annular support frame connected with the first support member and an installation box provided on the annular support frame, the installation box is completely located inside the annular cavity, and the lint cleaning member and the lint collecting member are both arranged on the installation box.

As a preferred technical solution of the above clothing drying apparatus provided by the present disclosure, the lint cleaning member includes a connecting rod and a scraper that are connected, in which the connecting rod is snap-fit on the installation box, and the scraper is arranged close to or against the annular filter member.

As a preferred technical solution of the above clothing drying apparatus provided by the present disclosure, the lint collecting member includes a lint collecting box which is detachably connected with the installation box, and a lint collecting port of the lint collecting box is located below the lint cleaning member.

As a preferred technical solution of the above clothing drying apparatus provided by the present disclosure, a gripping structure is formed on an outer wall of a rear side of the lint collecting box.

As a preferred technical solution of the above clothing drying apparatus provided by the present disclosure, the lint collecting port is arranged gradually opened in a direction approaching the lint cleaning member.

As a preferred technical solution of the above clothing drying apparatus provided by the present disclosure, the lint collecting member is arranged on a left portion or a right portion inside the front support mechanism.

As a preferred technical solution of the above clothing drying apparatus provided by the present disclosure, the front panel is provided with a door lock and a door hinge, which are arranged on left and right sides of the clothing throw-in port respectively, and the arrangement position of the lint collecting member inside the front support mechanism corresponds to the arrangement position of the door hinge on the front panel.

As a preferred technical solution of the above clothing drying apparatus provided by the present disclosure, the annular filter member includes an annular filter bracket and a plurality of arc-shaped filter screens, and the annular filter bracket is connected with the drying drum; the plurality of arc-shaped filter screens are all detachably connected with the annular filter bracket, and the plurality of arc-shaped filter screens are arranged in sequence in a circumferential direction of the annular filter bracket.

In the clothing drying apparatus provided by the present disclosure, an annular filter member is connected at one end of the drying drum, and the lint cleaning member and the lint collecting member are arranged such that when the annular filter member rotates, the lint on the annular filter member can be cleaned up, and further collected by the lint collecting member, so that during the operation of the clothing drying apparatus, when a wind flow in the drying drum passes through the annular filter member, the annular filter member will filter out and retain impurities such as the lint carried in the wind flow, and the lint cleaning member arranged on the front support mechanism will remove the lint and other impurities retained on the annular filter member to the interior of the lint collecting member so as to collect and process the lint and other impurities in a centralized manner, thus preventing the lint and other impurities from blocking the air duct of the clothing drying apparatus to affect the normal use of the clothing drying apparatus. In addition, since the lint cleaning member and the lint collecting member are both hidden inside the front support mechanism, clothing throw-in will not be hindered, so that the structure of the clothing drying apparatus of the present embodiment has the advantages of being concise and aesthetically beautiful.

Further, in the clothing drying apparatus provided by the present disclosure, at least a part of the annular filter member is arranged in the annular cavity formed by the first support member and the second support member together, the lint cleaning member and the lint collecting member are both are arranged on the second support member, and the lint collecting member is completely located inside the annular cavity. In this way, the wind flow in the drying drum enters the annular cavity through the second support member, the wind flow entering the annular cavity further passes through the annular filter member, and then enters an exhaust duct of the clothing drying apparatus from an opening formed at a lower part of the first support member. In this process, the annular filter member filters out and retains impurities such as the lint, thus preventing impurities such as the lint from entering the exhaust duct to cause blockage of the exhaust duct and affect wind outflow.

### BRIEF DESCRIPTION OF DRAWINGS

The clothing drying apparatus in a second embodiment of the present disclosure will be described below with reference to the accompanying drawings. In the drawings:
FIG. 1 is a schematic structural view of the clothing drying apparatus in the second embodiment;
FIG. 2 is a first exploded view of the clothing drying apparatus in the second embodiment;
FIG. 3 is a second exploded view of the clothing drying apparatus in the second embodiment;
FIG. 4 is a schematic structural view of the clothing drying apparatus in the second embodiment;
FIG. 5 is a schematic assembly view of the clothing drying apparatus in the second embodiment;
FIG. 6 is a schematic structural view of a first support member in the clothing drying apparatus in the second embodiment;
FIG. 7 is a schematic structural view of an annular support frame in the clothing drying apparatus in the second embodiment;
FIG. 8 is a schematic structural view of an installation box in the clothing drying apparatus in the second embodiment;
FIG. 9 is a schematic structural view of a lint cleaning member in the clothing drying apparatus in the second embodiment;
FIG. 10 is a schematic structural view of a lint collecting box in the clothing drying apparatus in the second embodiment;
FIG. 11 is a schematic structural view of an annular filter bracket in the clothing drying apparatus in the second embodiment; and
FIG. 12 is a schematic structural view of an arc-shaped filter screen in the clothing drying apparatus in the second embodiment.

List of reference signs:
1: front cover plate; 2: front panel; 21: clothing throw-in port; 31: door lock; 32: door hinge; 41: first support member; 42: second support member; 421: annular support frame; 422: installation box; 5: drying drum; 6: lint cleaning member; 61: connecting rod; 62: scraper; 7: lint collecting box; 71: gripping structure; 8: annular filter member; 81: annular filter bracket; 82: arc-shaped filter screen.

### DETAILED DESCRIPTION

Preferred embodiments of the present disclosure will be described below with reference to the accompanying drawings. It should be understood by those skilled in the art that these embodiments are only used to explain the technical principle of the present disclosure, and are not intended to limit the scope of protection of the present disclosure. For example, although the lint collecting member and the lint cleaning member in the drawings are installed on a right side of the support mechanism, this positional relationship is not invariable, and those skilled in the art can make adjustments thereto as needed so as to adapt to specific application scenes. For example, the lint collecting member and the lint cleaning member may be installed on an upper side, a left side or another position of the support mechanism, or the lint collecting member and the lint cleaning member may also be both installed at different positions in the support mechanism at the same time.

It should be noted that in the description of the present disclosure, terms indicating directional or positional relationships, such as "center", "upper", "lower", "left", "right", "vertical", "horizontal", "inner", "outer" and the like, are based on the directional or positional relationships shown in the accompanying drawings. They are only used for ease of description, and do not indicate or imply that the device or element must have a specific orientation, or be constructed or operated in a specific orientation, and therefore they should not be considered as limitations to the present disclosure. In addition, terms "first", "second" and "third" are only used for descriptive purposes, and should not be interpreted as indicating or implying relative importance.

In addition, it should also be noted that in the description of the present disclosure, unless otherwise clearly specified and defined, terms "install", "connect" and "connection" should be understood in a broad sense; for example, the connection may be a fixed connection, or may also be a detachable connection, or an integral connection; it may be a mechanical connection, or an electrical connection; it may be a direct connection, or an indirect connection implemented through an intermediate medium, or it may be internal communication between two elements. For those skilled in the art, the specific meaning of the above terms in the present disclosure can be interpreted according to specific situations.

In order to solve the problem pointed out in the second background art that in existing clothing dryers, the fiber lint removal part directly arranged on the clothing throw-in port of the clothing dryer will hinder clothing throw-in and make an overall structure of the clothing dryer not concise, thereby affecting the user experience in use, the second embodiment provides a clothing dryer.

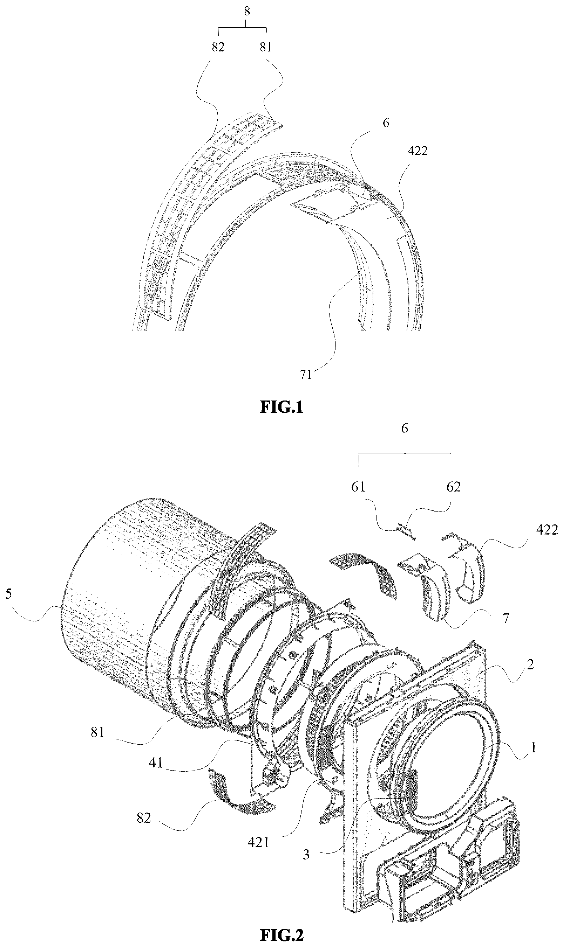

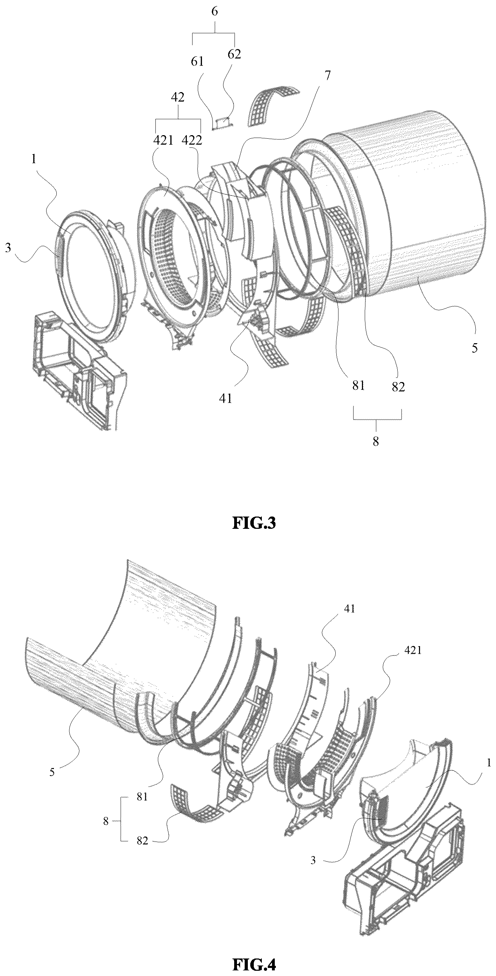

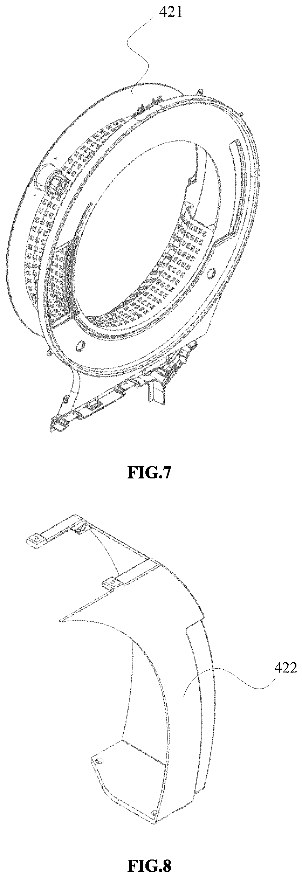

As shown in FIGS. 1, 2, 3, 4, 5, 6 and 7, a clothing drying apparatus provided by the present embodiment includes a cabinet (not shown in the figure) and a drying drum 5; a front panel 2 of the cabinet is formed with a clothing throw-in port 21, and the front panel 2 is also provided with a front support mechanism which is located between the front panel 2 and the drying drum 5; the clothing drying apparatus further includes a lint cleaning member 6, a lint collecting member and an annular filter member 8; the annular filter member 8 is connected with the drying drum 5 and can rotate when driven by the drying drum 5; the lint cleaning member 6 is arranged on the front support mechanism, and the lint collecting member is completely arranged inside the front support mechanism or on a rear side of the front support mechanism; the lint cleaning member 6 is arranged to be capable of cleaning up the lint on the annular filter member 8 when the annular filter member 8 rotates so that the lint can be collected by the lint collecting member.

Exemplarily, in order to enable those skilled in the art to clearly understand the technical solution of the clothing drying apparatus provided by the present embodiment and to implement it smoothly on this basis, the position relationship, connection relationship and cooperation relationship of relevant components of the clothing drying apparatus in the present embodiment and the working principle of the clothing drying apparatus will be described clearly and completely below.

The drying drum 5 is connected with the annular filter member 8 at an end toward the front panel 2, so when a motor in the clothing drying apparatus drives the drying drum 5 to rotate, the annular filter member 8 also rotates therewith. The annular filter member 8 may be an annular plate provided with filter holes. In this way, the annular filter member 8 has a function of allowing a wind flow passing through the drying drum 5 to blow through the annular filter member 8, and the annular filter member 8 can filter out impurities such as the lint carried in the wind flow and retain them on a side of the annular filter member 8 that faces its axis.

The front support mechanism is arranged on the front panel 2, and the front support mechanism is located between the front panel 2 and the drying drum 5. The front support mechanism is provided with a lint cleaning member 6 and a lint collecting member, that is, the front panel 2, the front support mechanism, the lint cleaning member 6 and the lint collecting member are fixedly connected together in a detachable or non-detachable manner so as to ensure that when the drying drum 5 and the annular filter member 8 rotate relative to the front panel 2, the lint cleaning member 6 and the lint collecting member are stationary relative to the front panel 2, so that the annular filter member 8 rotates relative to the lint cleaning member 6 and the lint collecting member.

The lint cleaning member 6 is arranged to be capable of cleaning up the lint on the annular filter member 8 when the annular filter member 8 rotates, and the lint collecting member collects impurities such as the lint cleaned up by the lint cleaning member 6. The lint cleaning member 6 and the lint collecting member of the present embodiment can be arranged on the side of the annular filter member 8 that faces its axis. The lint cleaning member 6 may be a brush, a scraper 62 or other structures that can clean up impurities such as the lint.

In a case where the clothing drying apparatus of the present embodiment is in use, when the wind flow in the drying drum 5 passes through the annular filter member 8, the annular filter member 8 will filter out the impurities such as the lint carried in the wind flow and retain them, and the lint cleaning member 6 arranged on the front support mechanism will remove the lint and other impurities retained on the annular filter member 8 to the interior of the lint collecting member so as to collect and process the lint and other impurities in a centralized manner, thus preventing the lint and other impurities from blocking an air duct of the clothing drying apparatus to affect the normal use of the clothing drying apparatus. In addition, since the lint cleaning member 6 and the lint collecting member are both hidden inside the front support mechanism, clothing throw-in will not be hindered, so that the structure of the clothing drying apparatus of the present embodiment has the advantages of being concise and aesthetically beautiful.

As shown in FIGS. 1, 2, 3, 4, 5, 6 and 7, as a preferred implementation of the above clothing drying apparatus provided by the present embodiment, the front support mechanism includes a first support member 41 and a second support member 42 that are connected; at least one of the first support member 41 and the second support member 42 is provided on the front panel 2, and the first support member 41 and the second support member 42 together form an annular cavity that communicates the air duct of the clothing drying apparatus with an interior of the drying drum 5; the lint cleaning member 6 and the lint collecting member are both arranged on the second support member 42, the lint collecting member is completely located inside the annular cavity, and at least a part of the annular filter member 8 is arranged inside the annular cavity.

Exemplarily, the first support member 41 and the second support member 42 are connected to each other, and at least one of the first support member 41 and the second support member 42 is provided on the front panel 2, so that the first support member 41 and the second support member 42 are both fixed relative to the front panel 2. Further, the first support member 41 and the second support member 42 are coaxial, and the first support member 41 may be arranged outside of the second support member 42 so that the first support member 41 and the second support member 42 together form the annular cavity.

A side wall of the second support member 42 may be provided with an opening portion, so that the lint cleaning member 6 and the lint collecting member can be both arranged on the second support member 42 through the opening portion of the second support member 42, and that both the lint cleaning member 6 and the lint collecting member are located in an interior of the annular cavity formed by the first support member 41 and the second support member 42 together.

The front support mechanism formed by the first support member 41 and the second support member 42 can be provided with an annular gap on a side toward the annular filter member 8, so that at least a part of the annular filter member 8 can be arranged in the interior of the annular cavity formed by the first support member 41 and the second support member 42 together.

A plurality of through holes can be formed on the side wall of the second support member 42, so that the wind flow in the drying drum 5 enters the annular cavity through the plurality of through holes provided on the second support member 42. The wind flow entering the annular cavity further passes through the annular filter member 8, and then enters an exhaust duct of the clothing drying apparatus from an opening formed at a lower part of the first support member 41. In this process, the annular filter member 8 filters out and retains impurities such as the lint, thus preventing impurities such as the lint from entering the exhaust duct to cause blockage of the exhaust duct and affect wind outflow. Moreover, when the annular filter member 8 rotates with the drying drum 5, the lint cleaning member 6 removes impurities such as the lint on the annular filter member 8 into the lint collecting member.

As shown in FIGS. 1, 2, 3, 7 and 8, as a preferred implementation of the above clothing drying apparatus provided by the present embodiment, the second support member 42 includes an annular support frame 421 connected with the first support member 41, and an installation box 422 arranged on the annular support frame 421. The installation box 422 is completely located inside the annular cavity, and the lint cleaning member 6 and the lint collecting member are both arranged on the installation box 422.

Exemplarily, the installation box 422 can be completely arranged inside the annular cavity at a position corresponding to the opening portion on the side wall of the second support member 42, and then the lint cleaning member 6 and the lint collecting member are both arranged on the installation box 422, so as to fix the lint cleaning member 6 and the lint collecting member.

As shown in FIGS. 1, 8 and 9, as a preferred implementation of the above clothing drying apparatus provided by the present embodiment, the lint cleaning member 6 includes a connecting rod 61 and a scraper 62 that are connected, the connecting rod 61 is snap-fit on the installation box 422, and the scraper 62 is arranged close to or against the annular filter member 8.

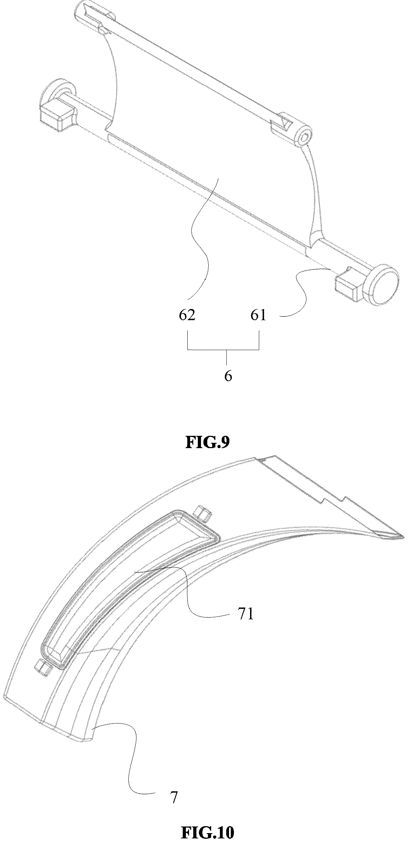

Exemplarily, as shown in FIG. 9, one end of the scraper 62 is provided on the connecting rod 61, and the scraper 62 can be integrally formed with the connecting rod 61 or fixedly connected with the connecting rod 61 by means of bonding or the like. Two ends of the connecting rod 61 are then snap-fit on the installation box 422, so that the lint cleaning member 6 is detachably connected with the installation box 422. When the lint cleaning member 6 is damaged, the lint cleaning member 6 can be conveniently replaced, so as to ensure that impurities such as the lint on the annular filter member 8 can be effectively cleaned up.

In the process of cleaning up impurities such as the lint on the annular filter member 8 by the scraper 62, the wind flow entering the annular cavity has carried moisture and impurities such as the lint simultaneously, and the impurities such as the lint are easier to stick to the annular filter member 8 in this situation. Since the impurities such as the lint that may cause the blockage of the exhaust duct have a certain size, and the impurities such as the lint accumulated on the annular filter member 8 have a certain thickness, if the scraper 62 abuts against the annular filter member 8 or a certain gap is provided between the scraper 62 and the annular filter member 8, the scraper 62 in each case can contact with the impurities such as the lint and remove them into the lint collecting member.

As shown in FIGS. 1, 8 and 10, as a preferred implementation of the above clothing drying apparatus provided by the present embodiment, the lint collecting member includes a lint collecting box 7 which is detachably connected with the installation box 422, and a lint collecting port of the lint collecting box 7 is located below the lint cleaning member 6.

Exemplarily, since the lint collecting box 7 is detachably connected with the installation box 422, when it is necessary to process impurities such as the lint in the lint collecting box 7, the lint collecting box 7 can be removed from the installation box 422 to facilitate the processing of the collected lint and other impurities.

The lint collecting port of the lint collecting box 7 is located below the lint cleaning member 6, which is advantageous for the impurities such as the lint cleaned up from the lint cleaning member 6 to fall into the lint collecting box 7 under its own gravity.

As shown in FIG. 10, as a preferred implementation of the above clothing drying apparatus provided by the present embodiment, a gripping structure 71 is formed on an outer wall of a rear side of the lint collecting box 7.

Exemplarily, the gripping structure 71 is formed on the outer wall of the rear side (i.e., a side facing the drum) of the lint collecting box 7, and the gripping structure 71 may be a structure such as a groove or a protrusion that facilitates manually pulling the lint collecting box 7.

As shown in FIGS. 1 and 10, as a preferred implementation of the above clothing drying apparatus provided by the present embodiment, the lint collecting port is arranged gradually opened in a direction approaching the lint cleaning member 6.

Exemplarily, the lint collecting port is arranged gradually opened in the direction approaching the lint cleaning member 6, so that an opening of the lint collecting port of the lint collecting box 7 is gradually increased, thereby facilitating impurities such as the lint to fall into the lint collecting box 7 through the larger opening of the lint collecting port.

As a preferred implementation of the above clothing drying apparatus provided by the present embodiment, the lint collecting member is arranged on a left portion or a right portion inside the front support mechanism.

Exemplarily, on the basis that the lint cleaning member 6 and the lint collecting member are arranged inside the front support mechanism as described above, the lint collecting member is further arranged on the left or right portion inside the front support mechanism; moreover, since the lint collecting port of the lint collecting box 7 is located below the lint cleaning member 6, the lint cleaning member 6 can clean up the lint on the upper left or upper right of the annular filter member 8, so that the lint will fall into the interior of the lint collecting member as the annular filter member 8 rotates. As shown in FIGS. 1, 2, 3, 4 and 7, the lint collecting member is arranged on the right portion inside the front support mechanism. When the drying drum 5 and the annular filter member 8 rotate clockwise, the lint cleaning member 6 can clean up the lint on the upper right of the annular filter member 8, and the lint falls into the interior of the lint collecting member as the annular filter member 8 rotates.

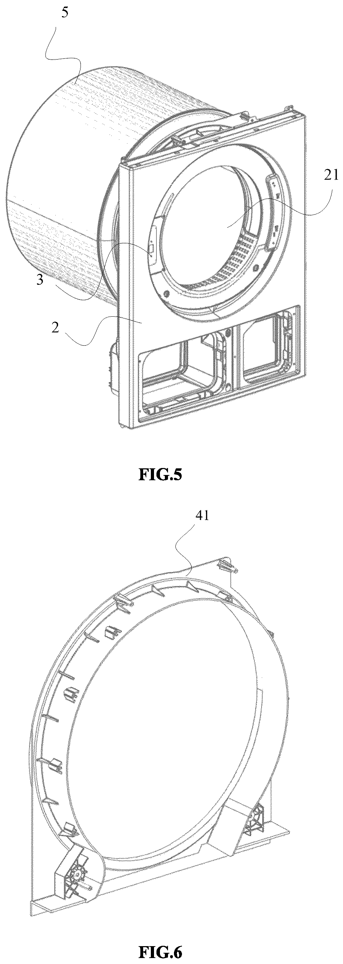

As shown in FIG. 5, as a preferred implementation of the above clothing drying apparatus provided by the present embodiment, the front panel 2 has a door lock 31 and a door hinge 32 thereon, and the door lock 31 and the door hinge 32 are respectively arranged on left and right sides of the clothing throw-in port 21. The arrangement position of the lint collecting member inside the front support mechanism corresponds to the arrangement position of the door hinge 32 on the front panel 2.

Exemplarily, a lock hook and a lock body of the door lock 31 need to occupy a certain space on the left side of the clothing throw-in port 21. Therefore, the present embodiment makes full use of the space on the right side of the clothing throw-in port 21 corresponding to the door hinge 32, so that the arrangements of the door lock 31 and the lint collecting member do not affect each other.

One end of the front cover plate 1 is connected to the front panel 2 through the door hinge 32, and the other end of the front cover plate 1 matches with the opposite side of the front panel 2 through the door lock 31.

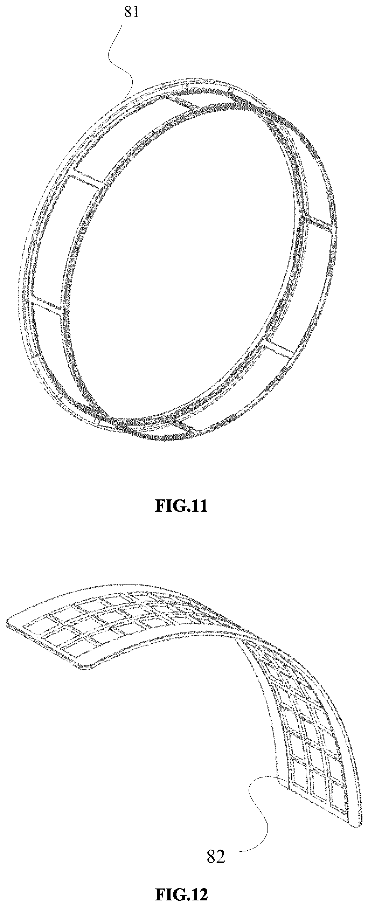

As shown in FIGS. 1, 2, 3, 4, 11 and 12, as a preferred implementation of the above clothing drying apparatus provided by the present embodiment, the annular filter member 8 includes an annular filter bracket 81 and a plurality of arc-shaped filter screens 82, and the annular filter bracket 81 is connected with the drying drum 5; the plurality of arc-shaped filter screens 82 are all detachably connected with the annular filter bracket 81, and the plurality of arc-shaped filter screens 82 are arranged in sequence in a circumferential direction of the annular filter bracket 81.

Exemplarily, this implementation realizes the fixed connection of the annular filter member 8 integrally with the drying drum 5 by connecting the annular filter bracket 81 with the drying drum 5; and the arc-shaped filter screens 82 are detachably connected with the annular filter bracket 81, so that when the arc-shaped filter screen 82 is damaged, the replacement thereof is made easy. The plurality of arc-shaped filter screens 82 are arranged in sequence in the circumferential direction of the annular filter bracket 81, so that the size of a single filter screen is small and the detachment is convenient.

Of course, the above alternative implementations, as well as the alternative implementations and the preferred implementations, may also be used in cross-cooperation, so as to obtain new implementations suitable for more specific application scenes through combination.

Furthermore, it can be understood by those skilled in the art that although some of the embodiments described herein include certain features included in other embodiments instead of other features, combinations of features from different embodiments are meant to be within the scope of protection of the present disclosure and form different embodiments. For example, in the claims of the present disclosure, any of the claimed embodiments may be used in any combination.

Hitherto, the technical solutions of the present disclosure have been described in connection with the preferred embodiments shown in the accompanying drawings, but it is easily understood by those skilled in the art that the scope of protection of the present disclosure is obviously not limited to these specific embodiments. Without departing from the principles of the present disclosure, those skilled in the art can make equivalent changes or replacements to relevant technical features. All these technical solutions after such changes or replacements will fall within the scope of protection of the present disclosure.

## Claims

1. A clothing drying apparatus, wherein the clothing drying apparatus comprises a cabinet and a drying drum; a front panel of the cabinet is formed with a clothing throw-in port, and the front panel is also provided with a front support mechanism which is located between the front panel and the drying drum;
the clothing drying apparatus further comprises a lint cleaning member, a lint collecting member and an annular filter member; the annular filter member is connected with the drying drum and can rotate when driven by the drying drum; the lint cleaning member is arranged on the front support mechanism, and the lint collecting member is completely arranged inside the front support mechanism or on a rear side of the front support mechanism;
the lint cleaning member is arranged to be capable of cleaning up the lint on the annular filter member when the annular filter member rotates so that the lint can be collected by the lint collecting member.

2. The clothing drying apparatus according to claim 1, wherein the front support mechanism comprises a first support member and a second support member that are connected; at least one of the first support member and the second support member is provided on the front panel, and the first support member and the second support member together form an annular cavity that communicates an air duct of the clothing drying apparatus with an interior of the drying drum; the lint cleaning member and the lint collecting member are both arranged on the second support member, the lint collecting member is completely located inside the annular cavity, and at least a part of the annular filter member is arranged inside the annular cavity.

3. The clothing drying apparatus according to claim 2, wherein the second support member comprises an annular support frame connected with the first support member and an installation box provided on the annular support frame, the installation box is completely located inside the annular cavity, and the lint cleaning member and the lint collecting member are both arranged on the installation box.

4. The clothing drying apparatus according to claim 3, wherein the lint cleaning member comprises a connecting rod and a scraper that are connected, the connecting rod is snap-fit on the installation box, and the scraper is arranged close to or against the annular filter member.

5. The clothing drying apparatus according to claim 3, wherein the lint collecting member comprises a lint collecting box which is detachably connected with the installation box, and a lint collecting port of the lint collecting box is located below the lint cleaning member.

6. The clothing drying apparatus according to claim 5, wherein a gripping structure is formed on an outer wall of a rear side of the lint collecting box.

7. The clothing drying apparatus according to claim 6, wherein the lint collecting port is arranged gradually opened in a direction approaching the lint cleaning member.

8. The clothing drying apparatus according to claim 1, wherein the lint collecting member is arranged on a left portion or a right portion inside the front support mechanism.

9. The clothing drying apparatus according to claim 8, wherein the front panel is provided with a door lock and a door hinge, which are arranged on left and right sides of the clothing throw-in port respectively, and the arrangement position of the lint collecting member inside the front support mechanism corresponds to the arrangement position of the door hinge on the front panel.

10. The clothing drying apparatus according to any one of claims 1 to 9, wherein the annular filter member comprises an annular filter bracket and a plurality of arc-shaped filter screens, and the annular filter bracket is connected with the drying drum; the plurality of arc-shaped filter screens are all detachably connected with the annular filter bracket, and the plurality of arc-shaped filter screens are arranged in sequence in a circumferential direction of the annular filter bracket.
